# EUROPEAN PATENT APPLICATION

(11) **EP 4 438 205 A1**
(43) Date of publication of application: **02.10.2024**
(21) Application number: 24164214.9
(22) Date of filing: 18.03.2024
(51) Int. Cl.: B22F 10/14, B22F 10/73, B22F 10/85, B22F 12/10, B33Y 10/00, B33Y 30/00, B33Y 40/00, B33Y 50/02, B22F 10/37, B22F 10/50, B22F 10/64, B22F 10/68, B22F 3/10, B22F 12/90, B33Y 40/20

(54) **THREE-DIMENSIONAL MOLDING APPARATUS AND THREE-DIMENSIONAL MOLDING METHOD**

(30) Priority: 23.03.2023 JP 2023046413
(71) Applicant: Ricoh Company, Ltd., Tokyo 143-8555 (JP)
(72) Inventor: OMODAKA, Katsuhiko, Tokyo, 143-8555 (JP)
(74) Representative: SSM Sandmair

(57) **Abstract**

A three-dimensional molding apparatus including a molding unit configured to mold a molded object inside a molding tank by applying a mold liquid to a powder layer; a drying unit configured to dry the molded object molded by the molding unit; and a drying control unit configured to adjust at least one of a drying time or a drying temperature of the drying unit, based on an arrangement of the molded object inside the molding tank.

## Description

### BACKGROUND OF THE INVENTION

### 1. Field of the Invention

The present disclosure relates to a three-dimensional molding apparatus and a three-dimensional molding method.

### 2. Description of the Related Art

A binder jet (BJ) method for applying a mold liquid to a powder layer is known as a three-dimensional molding method. In the BJ method, a molded object is formed by a molding unit, and then a process for drying the molded object is performed by a drying unit.

Patent Document 1 discloses a configuration for performing control to adjust the heating amount by a heating means based on the temperature detected by a temperature detecting means in a drying device.
Patent Document 1: Japanese Patent No. 5976494

In the conventional drying device, the drying is carried out regardless of the state of the object to be dried, and, therefore energy efficiency is poor.

An object of the present invention is to improve the energy efficiency in the drying unit of a three-dimensional molding apparatus.

### SUMMARY OF THE INVENTION

According to one aspect of the present invention, there is provided a three-dimensional molding apparatus including a molding unit configured to mold a molded object inside a molding tank by applying a mold liquid to a powder layer; a drying unit configured to dry the molded object molded by the molding unit; and a drying control unit configured to adjust at least one of a drying time or a drying temperature of the drying unit, based on an arrangement of the molded object inside the molding tank.

According to the aspects of the present invention, the energy efficiency in the drying unit of a three-dimensional molding apparatus can be improved.

### BRIEF DESCRIPTION OF THE DRAWINGS

FIG. 1 is a block diagram illustrating a schematic configuration of a three-dimensional molding apparatus according to an embodiment of the present invention;
FIG. 2 is a diagram illustrating an example of a configuration of a molding unit according to an embodiment of the present invention;
FIG. 3 is a perspective view illustrating an example of a schematic configuration of powder and molded objects in a molding tank after molding according to an embodiment of the present invention;
FIGS. 4A to 4C are diagrams illustrating an arrangement pattern of molded objects in a molding tank according to an embodiment of the present invention;
FIG. 5 is a diagram illustrating an arrangement of multiple heat sources in a drying unit according to an embodiment of the present invention;
FIG. 6 is a functional block diagram of a control unit according to an embodiment of the present invention;
FIG. 7 is a diagram illustrating an example of a hardware configuration of a control unit according to an embodiment of the present invention;
FIG. 8 is a flowchart of drying instruction adjustment control according to an embodiment of the present invention;
FIG. 9 is a diagram illustrating an example of the time transition of the amount of collected solvent according to an embodiment of the present invention;
FIG. 10 illustrates an example of the management information of the powder managing unit according to an embodiment of the present invention;
FIG. 11 illustrates an example of the powder history based on the management information of the powder managing unit according to an embodiment of the present invention;
FIG. 12 illustrates a modified example of the molding unit according to an embodiment of the present invention; and
FIG. 13 illustrates a block diagram illustrating a modified example of the drying control unit according to an embodiment of the present invention.

### DESCRIPTION OF THE EMBODIMENTS

Hereinafter, the embodiment will be described with reference to the attached drawings. In order to facilitate understanding of the description, the same elements in the drawings will be denoted by the same reference numerals whenever possible, and duplicate descriptions will be omitted.

In the following description, a "powder layer 51" refers to a layer containing powder 50 (may also be described as "mixed powder") in a molding unit 3. The powder layer 51 may be a flattened layer. The powder 50 may also contain a metal, such as aluminum or an aluminum alloy, but may be formed of other metals. A "mold layer 61" refers to a layer in which the mold liquid 60 is applied to the powder layer 51. The mold layer 61 is a layered molded object to which the powder 50 is combined by applying the mold liquid 60. Each of the "powder layer 51" and the "mold layer 61" is formed of one layer. Further, a "molded object 62" refers to an aggregate formed by laminating a plurality of the mold layers 61, the aggregate being in a state before the molded object is completed. On the other hand, a "three-dimensional molded object" refers to the molded object 62 that has been sintered.

### <Basic configuration of the three-dimensional molding apparatus>

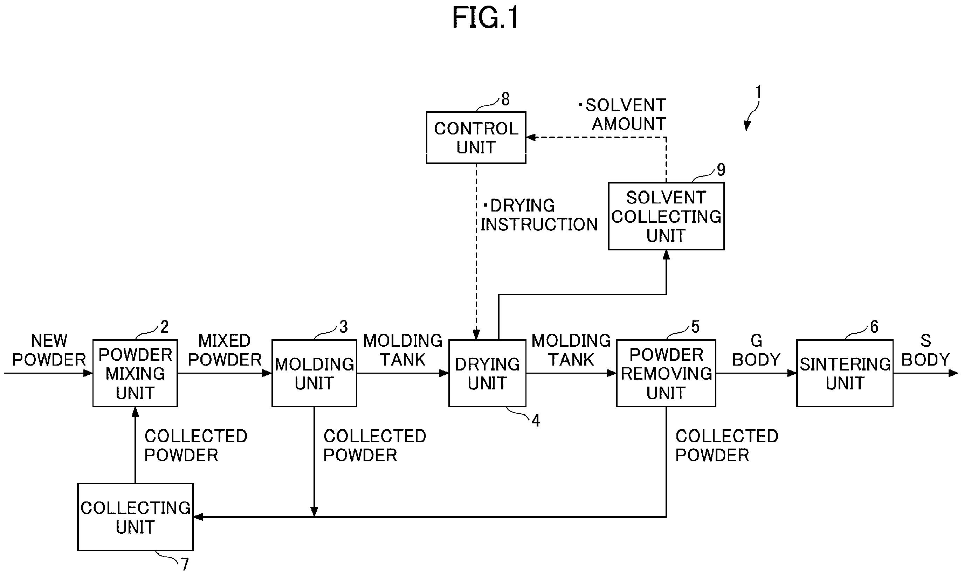

Referring to FIGS. 1 to 5, the basic configuration of a three-dimensional molding apparatus 1 according to the embodiment will be described.

FIG. 1 is a block diagram illustrating a schematic configuration of the three-dimensional molding apparatus 1 according to an embodiment of the present invention. The three-dimensional molding apparatus 1 forms a three-dimensional molded object by a binder jet (BJ) method in which a mold liquid 60 is applied to a powder layer 51. In the BJ method, a three-dimensional molded object can be formed by selectively applying the mold liquid 60 to the powder layer 51, and performing drying, powder removal, and sintering with respect to the powder layer 51.

The three-dimensional molding apparatus 1 includes a powder mixing unit 2, the molding unit 3, a drying unit 4, a powder removing unit 5, a sintering unit 6, a collecting unit 7, and a control unit 8.

The powder mixing unit 2 generates mixed powder as powder to be supplied to the molding unit 3. The powder mixing unit 2 can generate mixed powder by mixing new powder not yet used for molding and powder (collected powder) already used for molding and collected by the collecting unit 7. Further, the powder mixing unit 2 can generate mixed powder at a desired mixing ratio based on a control instruction from the control unit 8 and supply the mixed powder to the molding unit 3.

The molding unit 3 molds the molded object 62 by using the mixed powder supplied from the powder mixing unit 2. The molding unit 3 may mold the molded object 62 by using only new powder.

The drying unit 4 dries the molded object 62 formed by the molding unit 3. Thereby, the mold liquid 60 included in the molded object 62 is dried and removed. In the drying unit 4, a molding tank 12 including the powder 50 used in the molding unit 3 is heated under reduced pressure, and the mold liquid 60 is dried. When the molded object 62 is dried in the drying unit 4, a solvent derived from the mold liquid 60 is generated. Heating by the drying unit 4 is performed by a plurality of heat sources. The drying unit 4 controls at least one of the drying time or the drying temperature to dry the molded object 62 based on a drying instruction input from the control unit 8.

The powder removing unit 5 removes excess powder 50 from the molded object 62 dried by the drying unit 4. In the powder removing unit 5, the powder 50 in the area where the mold liquid 60 is not applied is removed from the molding tank 12, and a green body (G body) is taken out as a three-dimensional object.

The sintering unit 6 generates a three-dimensional molded object (S body) by sintering the green body. The sintering unit 6 degreases and sinters the green body, for example, in a sintering furnace. As a result, a three-dimensional molded object is finally formed.

The collecting unit 7 collects the powder 50 from the molding unit 3 and the powder removing unit 5, and supplies the powder as collected powder to the powder mixing unit 2.

The control unit 8 controls the operation of each unit of the three-dimensional molding apparatus 1. For example, the control unit 8 controls the drying unit 4 based on a drying instruction. More specifically, the control unit 8 adjusts at least one of the drying time or the drying temperature of the drying unit 4 based on the arrangement of the molded object 62 inside the molding tank 12. The control unit 8 can identify the arrangement of the molded object by using arrangement information of the molded object 62 inside the molding tank 12 after the molding process is completed, the arrangement information being input from the molding unit 3, for example. Further, the control unit 8 may control a plurality of heat sources operated by the drying unit 4 based on the arrangement of the molded object 62 inside the molding tank 12.

The drying unit 4 is provided with a solvent collecting unit 9. The solvent collecting unit 9 collects the solvent generated by the drying performed by the drying unit 4, from the mold liquid 60 applied at the time of molding in the molding unit 3. The control unit 8 can further adjust at least one of the drying time or the drying temperature based on the amount of solvent collected by the solvent collecting unit 9 input from the solvent collecting unit 9.

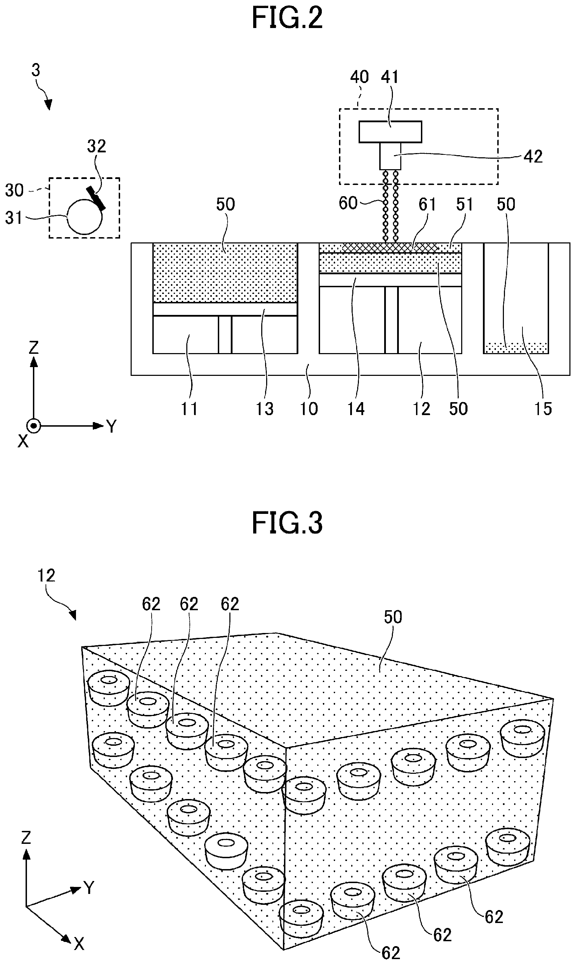

Referring to FIG. 2, an example of the operation of the molding unit 3 of the BJ system will be described. FIG. 2 is a diagram illustrating an example of the configuration of the molding unit 3.

In the following description, the X, Y, and Z directions are perpendicular to each other. The X and Y directions are horizontal, and the Z direction is vertical. The X direction is the axial direction of the rotation axis of a flattening unit 31. The Y direction is the moving direction of the flattening unit 31 and the alignment direction of a supply tank 11, the molding tank 12, and an excess powder tank 15 in a powder tank 10. The Z direction is the lifting direction of a supply stage 13 and a molding stage 14. In the following, the Z positive direction side may be referred to as the upper side and the Z negative direction side as the lower side for convenience of explanation.

The molding unit 3 includes the powder tank 10, a lamination unit 30, and an applying unit 40.

The powder tank 10 molds the powder layer 51 containing the powder 50. The applying unit 40 applies the mold liquid 60 to the powder layer 51 to form the mold layer 61. In the molding unit 3, a plurality of mold layers 61 are laminated to form a molded object.

The powder tank 10 includes the supply tank 11, the molding tank 12, the supply stage 13, the molding stage 14, and the excess powder tank 15. The powder tank 10 has a box-shape. The three upper surfaces of the supply tank 11, the molding tank 12, and the excess powder tank 15 are opened.

The lamination unit 30 includes the flattening unit 31 and a powder removing unit 32.

The supply tank 11 of the powder tank 10 is a tank for supplying the powder 50 to the molding tank 12. The supply tank 11 holds the powder 50 to be supplied to the molding tank 12. The supply stage 13 is provided at the bottom of the supply tank 11. The supply stage 13 is lifted and lowered in the vertical direction (Z direction). The side surface of the supply stage 13 is arranged so as to be in contact with the inner surface of the supply tank 11.

In the molding tank 12 of the powder tank 10, the powder 50 required for molding is supplied from the supply tank 11. The powder layer 51 and the mold layer 61 are formed in the molding tank 12. Further, a plurality of the mold layers 61 are laminated in the molding tank 12 to form the molded object 62.

The bottom portions of the supply tank 11 and the molding tank 12 are provided with the supply stage 13 and the molding stage 14, respectively, and are raised and lowered in the vertical direction (Z direction). The side surface of the molding stage 14 is arranged so as to be in contact with the inner surface of the molding tank 12. The upper surfaces of the supply stage 13 and the molding stage 14 are maintained to be horizontal.

The excess powder tank 15 of the powder tank 10 is a tank for holding the excess powder 50 among the powder 50 flattened by the flattening unit 31 when forming the powder layer 51. A means for attracting the powder 50 may be provided at the bottom of the excess powder tank 15, or the means may be configured such that the excess powder tank 15 can be removed. The excess powder tank 15 is arranged adjacent to the molding tank 12. The excess powder 50 held in the excess powder tank 15 is collected by the collecting unit 7 by applying the above-described optional method, and is re-supplied as collected powder from the collecting unit 7 to the powder mixing unit 2.

The powder 50 held in the supply tank 11 is appropriately replenished as the powder mixing unit 2 supplies mixed powder at any timing, for example, before the molding unit 3 starts molding or when the amount of the powder 50 in the supply tank 11 decreases. Although the powder tank 10 has two tanks in this example, that is, the supply tank 11 and the molding tank 12, the powder 50 may be supplied directly to the molding tank 12 from the powder mixing unit 2, without providing the supply tank 11.

The method of conveying the powder 50 from the powder mixing unit 2 to the supply tank 11 includes a screw conveyor system using a screw and an air transport system using air.

In the example illustrated in FIG. 2, the powder tank 10 has a configuration in which a single box is divided into three spaces along the Y direction to form the supply tank 11, the molding tank 12, and the excess powder tank 15. In another example, the supply tank 11, the molding tank 12, and the excess powder tank 15 may be formed of separate boxes. In such a configuration, it is preferable that the surfaces of the supply tank 11 and the molding tank 12 facing each other in the Y direction and the surfaces of the molding tank 12 and the excess powder tank 15 facing each other in the Y direction come into close contact. Thus, when the powder 50 is moved, leakage of the powder 50 out of the tank can be prevented. Further, the molding tank 12 including the molded object molded by the molding unit 3 can be easily conveyed to the drying unit 4 and the powder removing unit 5.

The flattening unit 31 of the lamination unit 30 flattens the mold layer 61 and the powder layer 51. The flattening unit 31 flattens the mold layer 61 by rotating the recoater as a rotating body. The flattening unit 31 rotates and operates so that the powder 50 of the supply stage 13 of the supply tank 11 is supplied to the molding tank 12 to form the powder layer 51. The flattening unit 31 moves back and forth in the Y direction along the stage surface (the surface on which the powder 50 is loaded) of the molding stage 14. More specifically, the flattening unit 31 horizontally moves from the outside of the supply tank 11 so as to pass above the supply tank 11 and the molding tank 12. As a result, the powder 50 is transferred and supplied on the molding tank 12, and the flattening unit 31 flattens the powder 50 while passing over the molding tank 12 to form the powder layer 51. The flattening unit 31 is a member that is longer than the inner dimensions of the molding tank 12 and the supply tank 11. The flattening unit 31 may use a blade or bar as a platelike member.

The powder removing unit 32 of the lamination unit 30 removes the powder adhered to the flattening unit 31. The powder removing unit 32 moves with the flattening unit 31 in contact with the peripheral surface of the flattening unit 31.

The applying unit 40 includes a carriage 41 and a head 42.

The head 42 applies the mold liquid 60 to the powder layer 51. The head 42 is, for example, an inkjet head, and has a nozzle row in which a plurality of nozzles are arranged. A color molded object may be formed by applying a cyan mold liquid, a magenta mold liquid, a yellow mold liquid, and a black mold liquid, or a mold liquid of one color may be applied from a plurality of nozzles. The method for applying the mold liquid 60 may be an inkjet method or a dispenser method.

At least one head 42 is mounted on the carriage 41 and moves back and forth in the X (main scanning), Y (sub scanning), and Z directions by a motor, a guide member, or the like.

FIG. 3 is a perspective view illustrating an example of a schematic configuration of the powder 50 and the molded object 62 in the molding tank 12 after molding.

The inside of the molding tank 12 is filled with the powder 50, and a plurality of the molded objects 62 are arranged. The dimension in the height direction (Z direction) of the mold layer 61 may be suitably changed according to the size of the molded object 62.

The plurality of molded objects 62 can be arranged in various patterns.

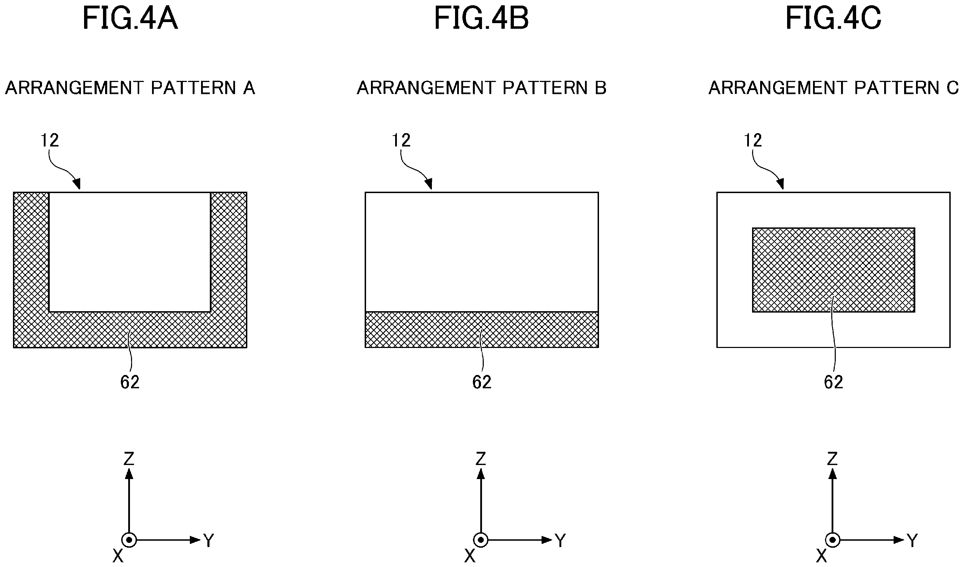

FIGS. 4A to 4C are diagrams illustrating an arrangement pattern of the molded object 62 in the molding tank 12. FIGS. 4A to 4C illustrate the inside of the molding tank 12 illustrated in FIG. 3 viewed from the X direction. FIGS. 4A, 4B, and 4C illustrate arrangement patterns A, B, and C, respectively. For example, examples of drying instructions in the case of the three arrangement patterns A, B, and C illustrated in FIGS. 4A, 4B, and 4C, respectively, are as follows.

In the arrangement pattern A illustrated in FIG. 4A, a plurality of the molded objects 62 are arranged in parallel along a horizontal direction (e.g., Y direction) in an area including the lowest layer of the molding tank 12. A plurality of the molded objects 62 are arranged in series along both sides of the molding tank 12 in the Y direction. That is, in the arrangement pattern A, the molded objects 62 are arranged along the bottom surface and side surfaces of the molding tank 12 at the outer edge part inside the molding tank 12.

In the arrangement pattern B illustrated in FIG. 4B, a plurality of the molded objects 62 are arranged in parallel along a horizontal direction (e.g., Y direction) in an area including the lowest layer of the molding tank 12. That is, in the arrangement pattern B, the molded objects 62 are arranged along the bottom surface of the molding tank 12 and on the outer edge portion inside the molding tank 12.

In the arrangement pattern C illustrated in FIG. 4C, a plurality of the molded objects 62 are arranged in parallel along a horizontal direction (e.g., Y direction) in an area including at least one intermediate layer excluding an area including the bottommost layer and the topmost layer of the molding tank 12. Further, when a plurality of intermediate layers are crossed, a plurality of the molded objects 62 are arranged in series in a height direction. That is, in the arrangement pattern C, the molded objects 62 are arranged in a center part excluding an outer edge part inside the molding tank 12.

The control unit 8 can control the drying unit 4 according to the arrangement pattern of the molded objects 62.

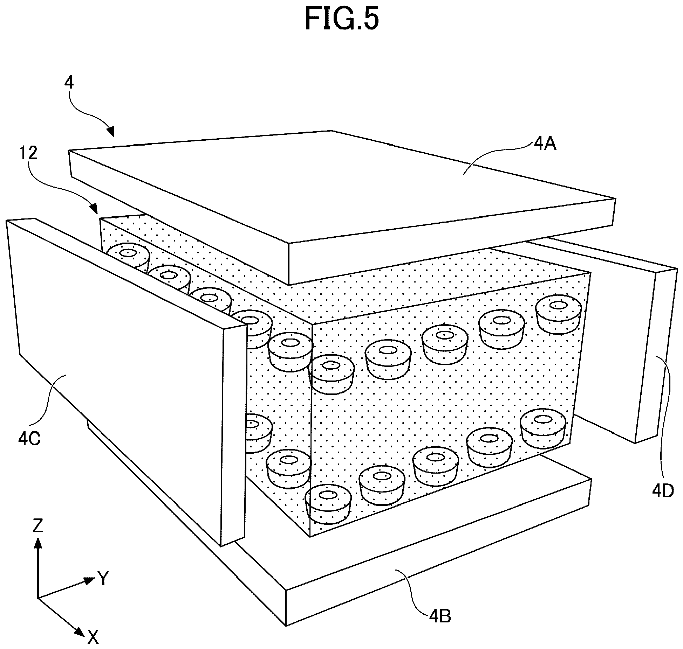

FIG. 5 is a diagram illustrating the arrangement of a plurality of heat sources in the drying unit 4. The drying unit 4 is provided with, for example, four heat sources 4A, 4B, 4C, and 4D. The number of heat sources is not limited. The heat sources 4A and 4B face each other through the upper and lower surfaces of the molding tank 12. The heat sources 4C and 4D face each other through the side surfaces of the molding tank 12. The heat sources 4A and 4B are arranged to face each other in the Z direction, and the opposing surfaces of the heat sources 4A, 4B, 4C, and 4D generate heat. Further, the heat sources 4A, 4B, 4C, and 4D are arranged around the molding tank 12 with predetermined intervals therebetween.

The heat source 4A is arranged at a position facing the upper surface of the molding tank 12 to heat the upper surface of the molding tank 12. The heat source 4B is arranged at a position facing the lower surface of the molding tank 12 to heat the lower surface of the molding tank 12. The heat source 4C is arranged at a position facing the side surface in the Y negative direction of the molding tank 12, to heat the side surface of the molding tank 12. The heat source 4D is arranged at a position facing the side surface of the molding tank 12 in the Y positive direction to heat the side surface of the molding tank 12 in the Y positive direction.

When the drying unit 4 has a plurality of heat sources, the control unit 8 can optionally select a heat source to operate, from among the plurality of heat sources according to the arrangement pattern of the molded objects 62.

### <Drying instruction adjustment control>

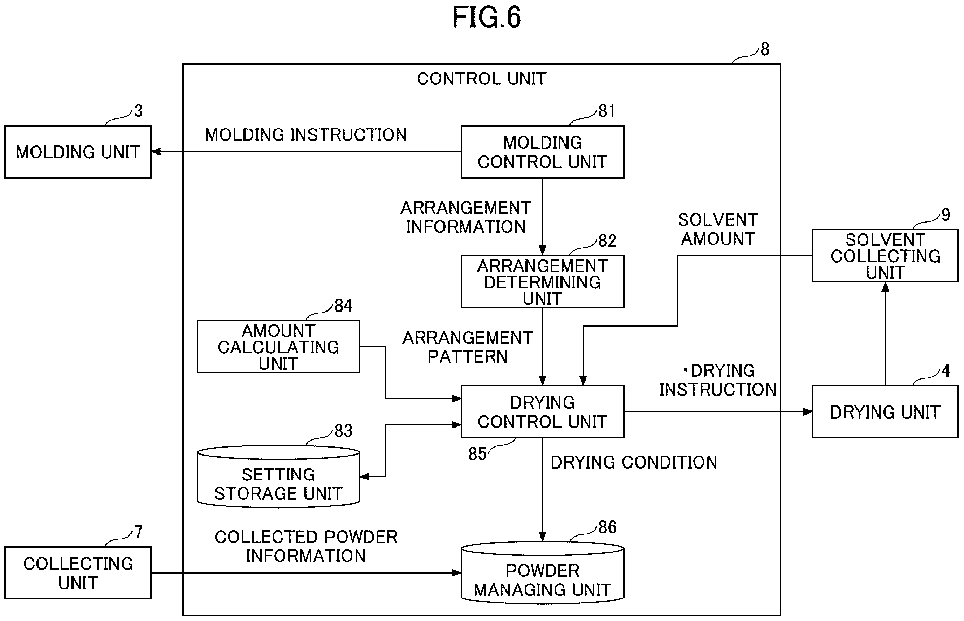

Next, the control of the drying unit according to the present embodiment will be described with reference to FIGS. 6 to 11.

FIG. 6 is a functional block diagram of the control unit 8. The control unit 8 includes a molding control unit 81, an arrangement determining unit 82, a setting storage unit 83, an amount calculating unit 84, a drying control unit 85, and a powder managing unit 86. The molding control unit 81 is connected to the molding unit 3, the drying control unit 85 is connected to the drying unit 4 and the solvent collecting unit 9, and the powder managing unit 86 is connected to the collecting unit 7.

The molding control unit 81 controls the operation of the molding unit 3. The molding control unit 81 generates a molding instruction of the molding unit 3 based on, for example, mold data related to the three-dimensional molded object to be molded. Then, the molding instruction is output to the molding unit 3, and the molding unit 3 is operated based on the molding instruction, thereby causing the molding unit 3 to perform a desired molding operation. The molding instruction includes the amount of the mold liquid 60 to be applied by the applying unit 40.

Further, the molding control unit 81 outputs information on the arrangement (arrangement information) of the plurality of molded objects 62 molded in the molding tank 12, to the arrangement determining unit 82. The arrangement information includes, for example, information on the position and area of the plurality of molded objects 62 in the molding tank 12.

The arrangement determining unit 82 determines the arrangement pattern based on the arrangement information of the molded objects 62 output from the molding control unit 81. The arrangement determining unit 82 stores a plurality of arrangement patterns in advance. Therefore, the arrangement determining unit 82 determines a corresponding arrangement pattern from among the plurality of arrangement patterns stored, for example, by using a technique such as well-known pattern matching, based on the arrangement information output from the molding control unit 81. The arrangement determining unit 82 outputs the determined arrangement pattern to the drying control unit 85.

The setting storing unit 83 stores drying conditions according to a plurality of arrangement patterns. The setting storing unit 83 stores drying conditions corresponding to a plurality of arrangement patterns determined by the arrangement determining unit 82 in the past, for example. That is, the setting storing unit 83 stores a plurality of data sets each including an arrangement pattern and drying conditions. Here, the drying conditions include at least one of the drying temperature or the drying time of the drying unit 4. The drying conditions may include information on the heat source to be operated among the plurality of heat sources. The data set of the setting storage unit 83 may be created and updated appropriately by, for example, the user of the three-dimensional molding apparatus 1, or may be stored in advance by the three-dimensional molding apparatus 1 by using a method such as simulation.

The amount calculating unit 84 calculates the amount of the mold liquid 60 to be applied to the powder 50 in the molding tank 12 in the molding unit 3. The amount calculating unit 84 outputs the calculated amount of the mold liquid 60 to the drying control unit 85.

With respect to the amount of solvent collected from the drying unit 4 by the solvent collecting unit 9 and the amount of the mold liquid 60 calculated by the amount calculating unit 84, any physical amount or unit such as weight or volume may be set.

The amount calculating unit 84 is preferably a simulator. The amount of the mold liquid 60 to be used for molding in the molding unit 3 may be calculated in advance by executing a molding operation in the simulator based on mold data or the like. The calculation efficiency can be improved by using the simulator.

Here, the solvent collecting unit 9 collects the solvent in the drying unit 4, for example. The solvent collected at this time includes not only ink and resin contained in the mold liquid 60, but also ink, compounds derived from resin, and other substances such as impurities in air. When heating under reduced pressure in the drying unit 4, the solvent collecting unit 9 collects the solvent from the drying unit 4 after the drying is completed.

The amount calculating unit 84 obtains the amount of the mold liquid 60 to be applied by the applying unit 40 from the molding instruction of the molding control unit 81, for example. The amount of the mold liquid 60 is determined from, for example, the amount of liquid per drop discharged from the head 42 of the applying unit 40, the number of nozzles of the head 42 used in the molding, and the number of times of discharging the liquid. The ratio of the solvent collected to the total amount of the mold liquid 60 is unique, and, therefore, a coefficient is determined in advance. Therefore, the amount calculating unit 84 can calculate the amount of the solvent to be collected by multiplying the total amount of the mold liquid 60 by a coefficient, for example.

The drying condition is set so that the amount of the solvent collected from the drying unit 4 by the solvent collecting unit 9 and the amount of the mold liquid 60 calculated by the amount calculating unit 84 are the same. However, the amount of the mold liquid 60 calculated by the amount calculating unit 84 is a theoretical value, and, therefore, if the theoretical value differs from the amount of solvent collected from the drying unit 4 by the solvent collecting unit 9, the energy efficiency is affected. Therefore, in the present embodiment, in step S15, the drying instruction is adjusted based on the amount of solvent collected from the drying unit 4 by the solvent collecting unit 9 and the amount of the mold liquid 60 calculated by the amount calculating unit 84. Accordingly, it is possible to perform the drying under a drying condition suitable for the actual amount of the mold liquid 60 contained in the molding tank 12 fed into the drying unit 4, thereby improving the energy efficiency.

The drying control unit 85 controls the operation of the drying unit 4. The drying control unit 85 acquires a drying condition corresponding to the arrangement pattern from the setting storage unit 83 based on the arrangement pattern input from the arrangement determining unit 82, and outputs a drying instruction based on the acquired drying condition to the drying unit 4. The drying instruction includes, for example, either one of the drying temperature or the drying time. The drying instruction may also include information on the heat source to be operated. For example, in the case of the arrangement pattern A, the drying temperature is set to 80°C and the drying time is set to 2 hours. The heat sources 4B, 4C, and 4D among the plurality of heat sources are operated. These heat sources are operated because these heat sources are close to the bottom and both side surfaces where the molded objects 62 are arranged. In the case of the arrangement pattern B, the drying temperature is set to 60°C and the drying time is set to 1 hour. In the arrangement pattern B, the number of the molded objects 62 is small in comparison to the arrangement pattern A, so the drying temperature is set to be lower. The drying time is also set to be shorter than that for the arrangement pattern A. Further, only one heat source 4B is operated among a plurality of heat sources. Only the heat source close to the bottom surface where the molded objects 62 are arranged is operated. In the case of the arrangement pattern C, the drying temperature is set to 90°C and the drying time is set to 3 hours. The distance between each molded object 62 and each heat source is large in the arrangement pattern C compared to the arrangement pattern A, and, therefore, the drying temperature is set to be higher than that for the arrangement pattern A, and the drying time is also set to be longer than that for the arrangement pattern A. Further, all of the plurality of heat sources are operated. The molded objects 62 are arranged on the upper surface, the bottom surface, and both side surfaces in the Y direction, and, therefore, all of the plurality of heat sources are operated.

A drying condition of "N/A" is also stored in advance in the setting storage unit 83. A drying condition corresponding to "N/A" is also stored in the setting storage unit 83, and, therefore, the drying control unit 85 can set a drying instruction based on the drying condition corresponding to "N/A". For the drying condition of "N/A", it is preferable to increase at least one of the drying temperature or drying time more than the drying condition of the arrangement pattern C so as to avoid insufficient drying of the molded objects 62 in any arrangement pattern. Thus, the drying control unit 85 can appropriately control the drying unit 4 according to the arrangement of the molded objects 62 in the molding tank 12.

The drying control unit 85 also controls the operation of the drying unit 4 based on the amount of solvent (solvent amount) collected by the solvent collecting unit 9 and the amount of the mold liquid 60 input from the amount calculating unit 84.

The drying control unit 85 outputs the drying condition to the powder managing unit 86.

The powder managing unit 86 manages the drying condition input from the drying control unit 85 and information of collected powder input from the collecting unit 7 as a data set. Here, information of collected powder is information on collected powder collected by the collecting unit 7. Information on collected powder includes information such as the mixing ratio of new powder and collected powder used in the molded object 62. With this configuration, when collected powder is used for molding, the history of drying conditions can be easily identified by referring to the data set of the powder managing unit 86.

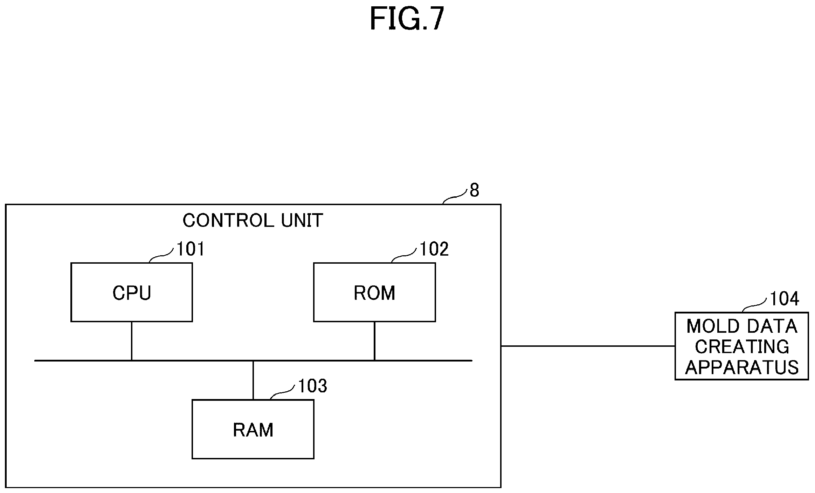

FIG. 7 is a diagram illustrating an example of the hardware configuration of the control unit 8.

The control unit 8 of the three-dimensional molding apparatus 1 includes a Central Processing Unit 101 (CPU), a Read Only Memory 102 (ROM) for storing fixed data such as a program for executing control, and a Random Access Memory 103 (RAM) for temporarily storing the mold data. Further, the control unit 8 receives the mold data from a mold data creating apparatus 104 that is an external computer or the like. The mold data creating apparatus 104 creates mold data obtained by slicing the molded object 62 into the mold layers 61. The mold data creating apparatus 104 may be separate from or integrated with the three-dimensional molding apparatus 1. The control unit 8 may be inside the three-dimensional molding apparatus 1 or outside the three-dimensional molding apparatus 1.

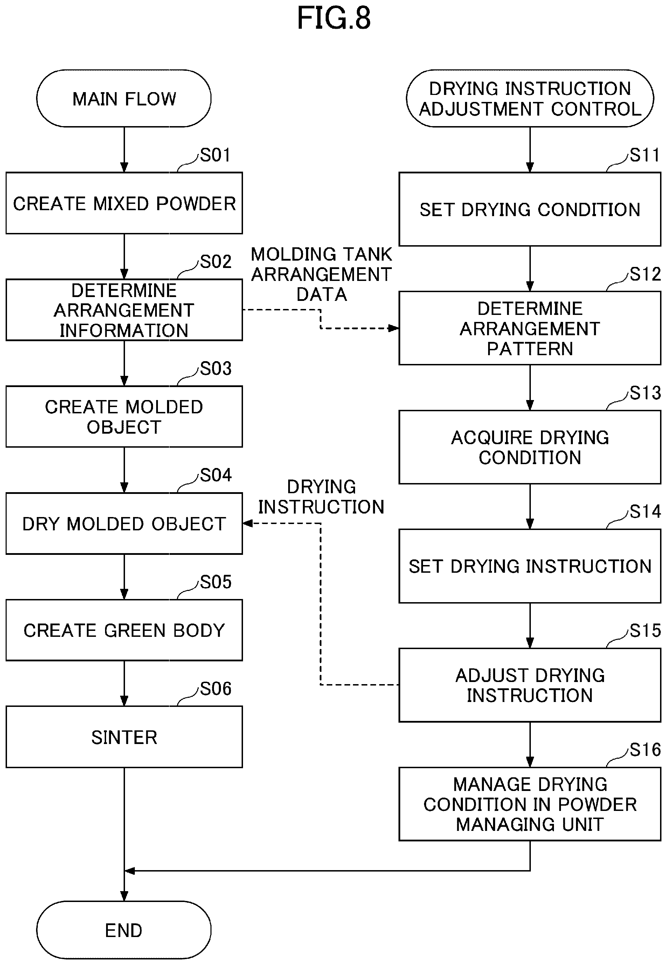

FIG. 8 is a flowchart of the drying instruction adjustment control according to an embodiment.

FIG. 8 illustrates a flow of a series of operations for molding a three-dimensional molded object executed by the three-dimensional molding apparatus 1, including a main flow and a drying instruction adjustment control flow.

In step S01, the powder mixing unit 2 mixes the new powder and the collected powder based on a predetermined mixing ratio to create a mixed powder (the powder 50) having a desired mixing ratio (powder mixing step). The powder mixing unit 2 supplies the created mixed powder to the molding unit 3. Step S01 may be omitted, and the powder 50 containing only the new powder may always be supplied to the molding unit 3.

In step S02, the molding control unit 81 generates a molding instruction based on the mold data input from the mold data creating apparatus 104. Then, the molding instruction is output from the molding control unit 81 to the molding unit 3. At this time, the arrangement determining unit 82 determines the arrangement information based on the mold data.

In step S03, the molding control unit 81 controls the operation of the molding unit 3 based on the molding instruction in step S02. The molding unit 3 molds the molded object 62 by using mixed powder (the powder 50) (molding step). Specifically, the molding unit 3 molds the powder layer 51 containing the powder 50 in the powder tank 10. The mold liquid 60 is applied to the powder layer 51 by the applying unit 40 to form the mold layer 61. A plurality of the mold layers 61 are laminated to form the molded object 62. The molded objects 62 are arranged based on the arrangement information of step S02. The molding tank 12 is conveyed from the molding unit 3 to the drying unit 4. The powder 50 (excess powder) made redundant is collected from the molding tank 12 in the molding unit 3 by the collecting unit 7 through the excess powder tank 15, and is supplied to the powder mixing unit 2 (collecting step).

In step S04, the molded object 62 formed in step S03 is dried by the drying unit 4 (drying step). The drying unit 4 dries the molded object 62 according to at least one of the drying temperature or the drying time reported from the control unit 8 based on the arrangement of the molded objects 62 inside the molding tank 12. At this time, the drying unit 4 may be controlled based on the information of a heat source to be operated reported from the control unit 8, based on the arrangement of the molded object 62 inside the molding tank 12. After the drying, the molding tank 12 is conveyed from the drying unit 4 to the powder removing unit 5.

In step S05, the powder removing unit 5 removes the excess powder 50 from the molded object 62 dried in step S04 to obtain a green body. The excess powder 50 is collected by the collecting unit 7 (collecting step). The green body is conveyed from the powder removing unit 5 to the sintering unit 6.

In step S06, the green body of step S05 is sintered by the sintering unit 6. Accordingly, a three-dimensional molded object is completed. When the process of step S06 is completed, the main flow is ended.

Next, the flow of the drying instruction adjustment control will be described. Each process (drying control step) of the drying instruction adjustment control can be executed in parallel with the main flow.

In step S11, a drying condition is set. The set drying condition is stored in the setting storage unit 83. The setting storage unit 83 stores drying conditions corresponding to a plurality of arrangement patterns.

In step S12, the arrangement determining unit 82 determines the arrangement pattern of the molded object 62 based on the arrangement information. The arrangement determining unit 82 determines the arrangement pattern by comparing the plurality of arrangement patterns stored in advance with the arrangement information. The arrangement determining unit 82 outputs the determined arrangement pattern to the drying control unit 85.

In step S13, the drying control unit 85 acquires the drying condition from the setting storage unit 83 based on the arrangement pattern in step S12. The setting storage unit 83 stores the drying condition for each of the plurality of arrangement patterns, and the drying control unit 85 acquires the drying condition corresponding to the arrangement pattern of step S12 from the setting storage unit 83.

In step S14, the drying control unit 85 sets a drying instruction based on the drying condition acquired in step S13. The drying instruction includes, for example, either the drying temperature or the drying time. The drying instruction may also include information on the heat source to be operated.

In step S15, the drying control unit 85 adjusts the drying instruction set in step S14 based on the amount of solvent collected by the solvent collecting unit 9 and the amount of the mold liquid 60 calculated by the amount calculating unit 84. The drying control unit 85 outputs the adjusted drying instruction to the drying unit 4 and the powder managing unit 86.

In step S15, for example, the drying instruction is adjusted based on the deviation between the amount of solvent and the amount of mold liquid, or the drying instruction is adjusted based on the amount of solvent.

First, the adjustment of the drying instruction based on the deviation between the amount of solvent and the amount of mold liquid will be described.

First, the reduction amount D (residual solvent amount D) is calculated by subtracting the amount of solvent from the amount of mold liquid. The reduction degree is determined from the reduction amount D. Here, the reduction degree is divided into three types of sections: (A) the amount of solvent is substantially small with respect to the amount of mold liquid, (B) the amount of solvent is somewhat small with respect to the amount of mold liquid, and (C) the amount of solvent is approximately equal with respect to the amount of mold liquid.

The sections (A) to (C) are expressed by the following relationships by using, for example, two thresholds TA and TB. The magnitude relationship between the thresholds is expressed as TA > TB.
- Section (A): threshold TA < reduction amount D
- Section (B): threshold TB < reduction amount D ≤ threshold TA
- Section (C): reduction amount D < threshold TB

The drying instruction is then adjusted according to the determined section. For example, the magnitude relationship between the increasing amounts TE1 and TE2 of the drying temperature is expressed as TE1 > TE2, and the magnitude relationship between the increasing amounts TI1 and TI2 of the drying time is expressed as TI1 > TI2.

In section (A), for example, the drying temperature is increased by an increasing amount TE1, and the drying time is increased by an increasing amount TI1 by a drying instruction. Further, a heat source which has not been operated is operated.

In section (B), by a drying instruction, the drying temperature is increased by an increasing amount TE2, and the drying time is increased by an increasing amount TI2.

Section (C) does not involve adjusting the drying instruction.

By adjusting the drying instruction in this way, the smaller the amount of solvent actually collected, the greater the increase amount of the drying temperature and the drying time, thereby promoting the drying operation.

Next, the adjustment of the drying instruction based on the amount of solvent will be described.

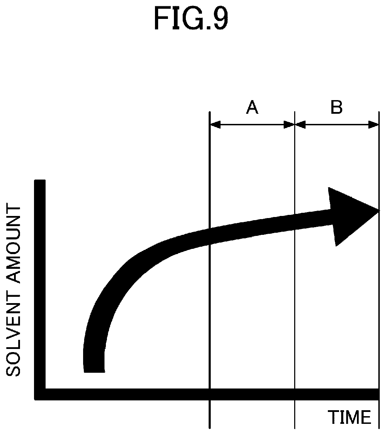

First, the amount of solvent is integrated to obtain the time transition of the amount of solvent collected by the solvent collecting unit 9. Next, the difference in the change amount of the solvent amount per unit time is confirmed from the time transition. For example, as the time transition, FIG. 9 is a diagram illustrating an example of the time transition of the collected solvent amount. FIG. 9 illustrates the section A and the section B as the time.

For example, the section B is a time section from the present time to a predetermined prior unit time. The section A is a time section to a further prior unit time before the section B. The change amount in the integrated value of the solvent amount in the section A and in the section B is compared. The change amount of the solvent amount is the slope of the graph illustrated in FIG. 9. Here, the deviation E of the change amount is obtained by subtracting the change amount in the section A from the change amount in the section B, and the degree of variation of the change amount is obtained. Here, the degree of variation is divided into two types of sections: (D) when the change amount of the solvent amount in the section B is greater than the change amount of the solvent amount in the section A, and (E) when the change amount of the solvent amount in the section B is equal to the change amount of the solvent amount in the section A. The sections (D) and (E) are expressed by the following relationships by using, for example, a threshold TC.
- Section (D): threshold TC < deviation E
- Section (E): deviation E < threshold TC

Next, the drying instruction is adjusted according to sections (D) and (E). In the case of section (D), for example, the drying is not sufficient, and, therefore, the drying temperature is increased by a predetermined amount, the drying time is increased by a predetermined amount, and a heat source which has not been operated is operated. On the other hand, in the case of section (E), the drying is sufficient, and, therefore, an adjustment is made to stop the drying operation, etc.

By adjusting the drying instruction in this way, the energy efficiency can be improved.

Returning to FIG. 8, in step S16, based on the drying instruction output to the drying unit 4 after the adjustment by the drying control unit 85 in step S15, the drying condition is associated with the information of the collected powder to be managed in the powder managing unit 86.

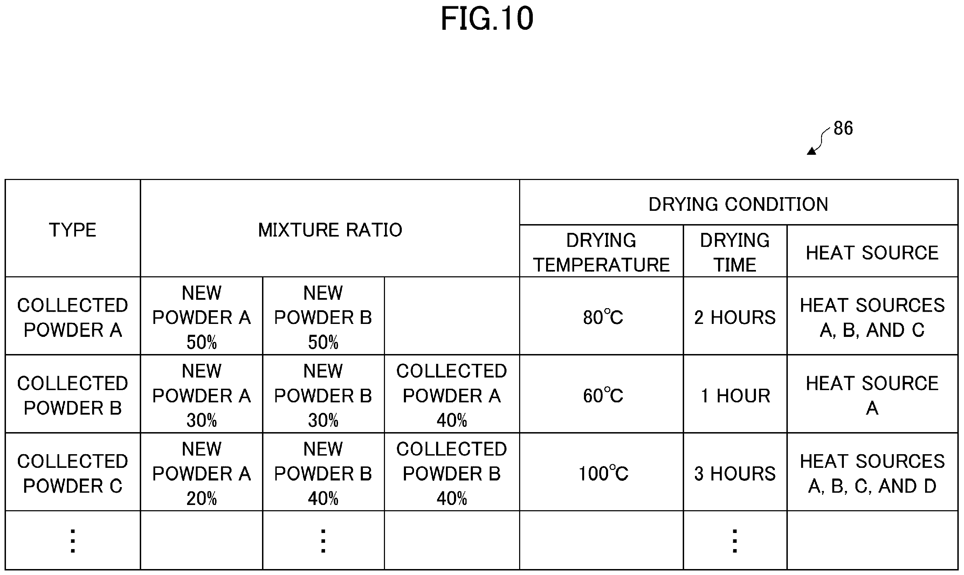

FIG. 10 is a diagram illustrating an example of the management information of the powder managing unit 86. As management information, for example, the type of powder and the mixing ratio are managed as information on collected powder, and the drying temperature, the drying time, and the heat source are managed as drying conditions.

The type of powder and the mixing ratio are input from the collecting unit 7 to the powder managing unit 86. Further, the drying condition is input from the drying control unit 85 to the powder managing unit 86. The drying condition includes the drying instruction output to the drying unit 4 in step S15.

In the example of FIG. 10, the powder managing unit 86 manages the information of "drying ratio" and "drying conditions (drying temperature, drying time, heat source)", in association with the powder types of "collected powder A", "collected powder B", and "collected powder C". New powders A and B are mixed in the collected powder A. In addition to the powders in the collected powder A, in the collected powder B, the collected powder A is mixed. In addition to the powders in the collected powder B, in the collected powder C, the collected powder B is mixed. That is, the powder is the powder used and collected in the molding unit 3 in the order of the collected powder A, the collected powder B, and the collected powder C.

An example of the powder managing unit 86 is described to have a configuration of managing the collected powders A, B, and C collected by the collecting unit 7 in association with information on the drying temperature, the drying time, and the heat source in the drying unit 4, but the drying condition may be at least one of the drying temperature, the drying time, and the heat source.

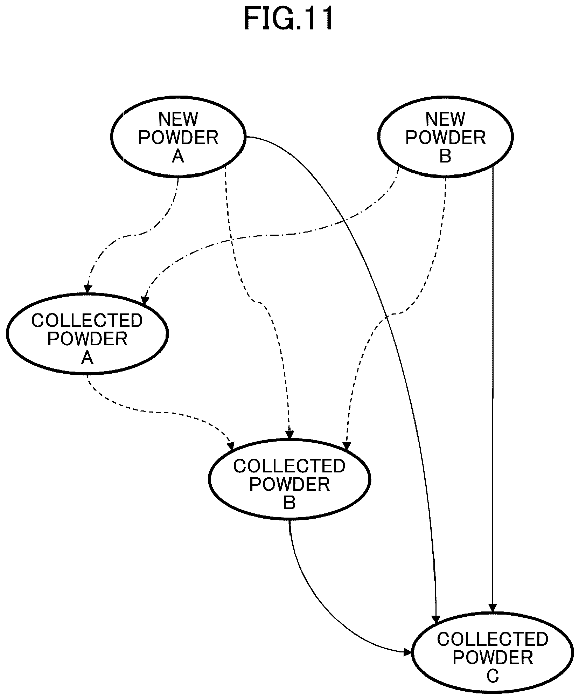

That is, the management information of the powder managing unit 86 includes history information on the powder 50 used for molding in the three-dimensional molding apparatus 1. Therefore, for example, based on the management information of the powder managing unit 86, the present molding conditions can be controlled by referring to the history of the past mixing ratio and drying conditions. FIG. 11 is a diagram illustrating an example of the powder history based on the management information of the powder managing unit 86. The example of FIG. 11 illustrates the history of the powder mixture in each of the three kinds of collected powders A to C illustrated in FIG. 10. The relationship between the powders used for collected powder A is indicated by a dash-dot line, the relationship between the powders used for collected powder B is indicated by a dotted line, and the relationship between the powders used for collected powder C is indicated by a solid line.

The characteristics of the powder 50 may change, for example, in the drying unit 4. Therefore, when the collected powder is reused repeatedly, the characteristics of the mixed powder may also change compared with the case where only the new powder is mixed. Therefore, by using the management information of the powder managing unit 86, for example, reference can be made to the past mixing ratio of the collected powder and the history of the drying conditions, so that the characteristics of the mixed powder currently used for molding can be identified. Thus, for example, the characteristics of the powder 50 can be controlled so as to satisfy a predetermined reference value. For example, by adjusting the mixing ratio of the new powder and the collected powder in the powder mixing unit 2, the characteristics of the mixed powder can be made to satisfy a predetermined reference value.

When the processing in step S16 is completed, the flow of the drying instruction adjustment control is ended.

The three-dimensional molding apparatus 1 according to the present embodiment is provided with the molding unit 3 for applying the mold liquid 60 to the powder layer 51 and molding the molded object 62 inside the molding tank 12, the drying unit 4 for drying the molded object 62, and the drying control unit 85 of the control unit 8 for adjusting at least one of the drying time or the drying temperature of the drying unit 4 based on the arrangement of the molded objects 62 inside the molding tank 12.

In a conventional drying device having a drying function similar to that of the drying unit 4 of the present embodiment, regardless of the state of the molded objects 62, the drying operation is performed under a drying condition such as a certain drying time and a certain drying temperature. In this case, the energy efficiency of the drying operation is reduced depending on the arrangement of the molded objects 62 to be dried.

On the other hand, depending on various conditions of the molded objects 62, there may be a case where the molded objects cannot be dried sufficiently under drying conditions such as a certain drying time or a certain drying temperature. In this case, the drying deficiency cannot be determined without confirming the molded objects 62 taken out from the drying device after the drying is completed, and, therefore, the efficiency is reduced.

In the three-dimensional molding apparatus 1 of the present embodiment, at least one of the drying time or the drying temperature of the drying unit 4 is adjusted based on the arrangement of the molded objects 62 inside the molding tank 12. Therefore, in the present embodiment, the energy efficiency in the drying unit 4 of the three-dimensional molding apparatus 1 is improved.

When the drying unit 4 of the present embodiment has a plurality of heat sources, the drying control unit 85 further selects the heat source to be operated from among the plurality of heat sources based on the arrangement of the molded objects 62 inside the molding tank 12. This configuration further improves energy efficiency.

In the three-dimensional molding apparatus 1 of the present embodiment, the control unit 8 is provided with the arrangement determining unit 82 for determining the arrangement pattern of the molded objects 62 inside the molding tank 12, and the setting storing unit 83 for storing the setting information including the drying time, the drying temperature, and the heat source as drying conditions of the drying unit 4 corresponding to the arrangement pattern. Based on the arrangement pattern determined by the arrangement determining unit 82, the drying control unit 85 identifies the drying conditions from the setting information stored in the setting storing unit 83, and controls the drying unit 4.

With this configuration, the drying conditions including the drying time, the drying temperature, and the heat source can be stored arbitrarily in advance for each arrangement pattern of the molded objects 62. Thus, appropriate drying conditions can be set for various arrangement patterns, and the energy efficiency can be improved.

Further, the three-dimensional molding apparatus according to the present embodiment has the solvent collecting unit 9 for collecting the solvent evaporated in the drying unit 4 from the mold liquid 60 applied at the time of molding in the molding unit 3. The drying control unit 85 estimates the drying state of the molded object 62 from the change amount per time of the solvent collected in the solvent collecting unit 9, and adjusts at least one of the drying time, the drying temperature, and the heat source.

The mold liquid 60 dried in the drying unit 4 can be collected as a liquid and calculated as a solvent amount. When the change amount is confirmed by using the solvent amount as the collected amount per unit time, the trend of the change amount can be determined. For example, estimations can be made that when the collected amount per unit time increases, the drying is proceeding efficiently, when the collected amount per unit time decreases, the drying is close to the end, and when collected amount per unit time does not change, the drying has ended, and so on. Based on the estimation result, the drying control unit 85 controls the drying unit 4 to control the drying temperature such as "increasing the drying temperature", "decreasing the drying temperature," and "maintaining the drying temperature", and to control the drying time such as "extending the drying time", "shortening the drying time", and "maintaining the drying time". Based on the estimation result, the drying control unit 85 may control the drying unit 4 with respect to a heat source such as "operating a predetermined heat source" or "stopping a predetermined heat source" among the plurality of heat sources 4A to 4D.

In the present embodiment, the drying unit 4 is controlled based on the amount of solvent collected by the solvent collecting unit 9, and, therefore, the drying can be controlled in accordance with the state of the molded objects 62 in the drying unit 4, and the energy efficiency is further improved.

In the three-dimensional molding apparatus 1 of the present embodiment, the control unit 8 includes the amount calculating unit 84 for calculating the amount of the mold liquid 60. The drying control unit 85 compares the amount of solvent collected by the solvent collecting unit 9 with the amount of the mold liquid 60 calculated by the amount calculating unit 84, and adjusts at least one of the drying time or the drying temperature. The drying control unit 85 may further adjust at least one of the heat sources.

For example, when the amount of solvent collected by the solvent collecting unit 9 is small relative to the amount of the mold liquid 60 calculated by the amount calculating unit 84, the drying unit 4 is controlled to "increase the drying temperature", "extend the drying time", "operate a heat source that is not operating", etc. When the amount of solvent collected by the solvent collecting unit 9 is increased from a small amount relative to the amount of the mold liquid 60 calculated by the amount calculating unit 84, the drying unit 4 is controlled to "decrease the drying temperature", "maintain the drying temperature", "shorten the drying time", "maintain the drying time", etc. Further, the heat source may be controlled to "stop some of the heat sources", etc. When the amount of solvent collected by the solvent collecting unit 9 becomes equal to the amount of the mold liquid 60 calculated by the amount calculating unit 84, the drying unit 4 is controlled to "lower the drying temperature", "maintain the drying temperature", "turn OFF (return the drying temperature to the outside air temperature)", "shorten the drying time", "maintain the drying time", "turn OFF (change the remaining time of the drying time to 0 to stop the drying operation)", and the like. Further, the heat sources may be controlled to "stop all heat sources" or the like.

In the present embodiment, the amount of solvent collected by the solvent collecting unit 9 is compared with the calculation result of the amount of solvent collected by the solvent collecting unit 9, and the drying unit 4 is controlled, for example, thereby further improving the energy efficiency.

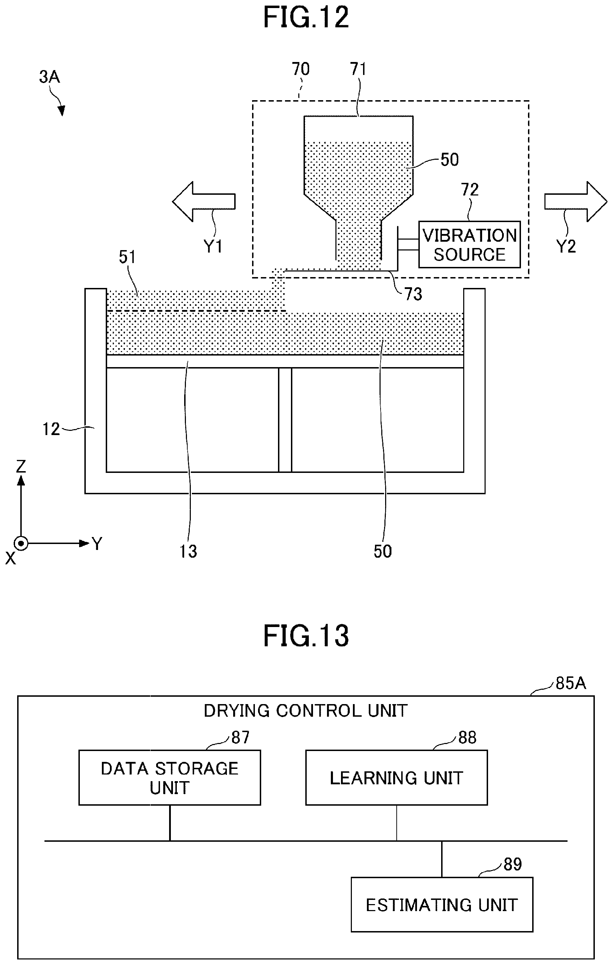

FIG. 12 is a diagram illustrating a modified example of the molding unit. A molding unit 3A according to the modified example illustrated in FIG. 12 includes a powder supplying unit 70 instead of the supply tank 11 of the molding unit 3 illustrated in FIG. 1. The descriptions in common with FIG. 1 will be omitted accordingly.

The powder supplying unit 70 supplies powder 50 to the powder layer 51 in the molding tank 12. The powder supplying unit 70 is movable in the horizontal direction (Y1 and Y2 directions) and scans the upper part of the molding tank 12 to supply the powder 50 to the molding tank 12.

The powder supplying unit 70 includes a hopper 71, a vibration source 72, and a trough 73.

The hopper 71 holds the powder 50 supplied to the molding tank 12.

The trough 73 supplies the powder 50 to the molding tank 12. The trough 73 is a supply path for supplying the powder 50 held by the hopper 71 to the molding tank 12. Preferably, the length (width) of the trough 73 in the X direction is the same as the length (width) of the molding tank 12 in the X direction. The vibration source 72 vibrates the trough 73. When the trough 73 is vibrated by the vibration source 72, the powder 50 falls into the molding tank 12 from the opening of the trough 73.

Similar to the molding unit 3 illustrated in FIG. 1, the molding unit 3A includes the applying unit 40, the lamination unit 30, and the excess powder tank 15. The powder supplying unit 70 serving as a molding unit forms the powder layer 51 containing the powder 50 by supplying the powder. The applying unit 40 applies the mold liquid 60 to the powder layer 51 to form the mold layer 61. In the molding unit 3A, a plurality of the mold layers 61 are laminated to form the molded object 62.

FIG. 13 is a block diagram illustrating a modified example of the drying control unit. The drying control unit 85 illustrated in FIG. 6 may be replaced by a drying control unit 85A according to the modified example illustrated in FIG. 13.

The drying control unit 85A may implement a machine learning program. The drying control unit 85A learns the association between the mold data, the surface information, and the control of each unit of the optimal three-dimensional molding apparatus 1, so that optimal molding control can be executed on similar mold data. The machine learning program includes a data storage unit 87, a learning unit 88, and an estimating unit 89.

The data storage unit 87 receives the arrangement information of the molded objects 62 in the molding tank 12, the drying time and the drying temperature of the drying unit 4, and the like, and stores the received information as data.

The learning unit 88 extracts feature values from the data stored in the data storage unit 87, and learns the relationship between the feature values. The algorithm used in the learning unit 88 is not particularly limited, and deep learning based on a neural network, an unsupervised learning model, a supervised learning model, a reinforcement learning model, and the like can be applied. The training data input to the algorithm used in the learning unit 88 is, for example, image data indicating the arrangement of the molded objects 62 captured by an image capturing device. Numerical parameters from 0 to 10, for example, are used as feature values. Feature values are set for each image data.

For example, when a high value parameter is set, the state of the molded objects 62 in the image data is "arranged outside the molding tank 12", "the laminate height is low", "the number of molded objects 62 is small", "the molded object 62 is small", etc.

For example, when a low value parameter is set, the state of the molded objects 62 in the image data is "arranged inside the molding tank 12", "the laminated height is high", "the number of molded objects 62 is large", "the molded object 62 is large", and so on.

Further, even in a similar state, if a part of the data has a different part, the value parameter may be changed according to the degree of difference.

The estimating unit 89 estimates an appropriate drying time or drying temperature based on the result learned by the learning unit 88. The drying control unit 85A controls the drying time or drying temperature based on the estimation by the estimating unit 89.

The present invention is not limited to the above embodiments. Embodiments which have been suitably modified by a person skilled in the art are also included in the scope of the present invention so long as they have the features of the present invention. Each element provided in the present embodiment and the arrangement, condition, shape, etc., thereof are not limited to those illustrated and can be changed accordingly. The combination of each element provided in the present embodiment can be changed accordingly as long as there is no technical contradiction.

In the present embodiment, the drying control unit 85 of the control unit 8 adjusts both the drying time and the drying temperature of the drying unit 4 based on the arrangement pattern of the molded object 62 inside the molding tank 12. However, the drying control unit 85 may be configured to adjust at least one of the drying time or the drying temperature, or the drying control unit 85 may be configured to adjust only one of the drying time or the drying temperature and fix the other. In the case where only one of the drying time or the drying temperature is adjusted, it is preferable to adjust the drying temperature because adjusting the drying temperature has a higher effect on the drying result of the molded object 62 than the drying time.

Similarly, in the present embodiment, the control unit 8 adjusts the drying time, the drying temperature, and the heat source of the drying unit 4 based on the arrangement pattern of the molded objects 62 inside the molding tank 12. However, it is also possible to adjust one of the drying time or the drying temperature, and adjust the heat source, or to fix the operating heat source and adjust only one of the drying time or the drying temperature.

Thus, when one of the drying time, the drying temperature, or the heat source is adjusted as the drying condition of the drying unit 4, the drying control unit 85 may hold the drying condition to be fixed in advance and exclude this drying condition from the data set stored in the setting storage unit 83. Thus, the storage capacity required can be reduced in the setting storage unit 83.

In the present embodiment, the arrangement determining unit 82 determines the arrangement pattern based on the arrangement information of the molded object 62 in the molding tank 12, and the drying control unit 85 sets the drying instruction based on the arrangement pattern. However, the drying control unit 85 may be configured to set the drying instruction based on the arrangement information. In this case, for example, the data set of drying conditions previously stored in the setting storage unit 83 may be subdivided compared with the arrangement pattern of the present embodiment, and the drying control unit 85 may learn the appropriate drying conditions by using a machine learning model or the like based on the arrangement information.

In the present embodiment, the powder managing unit 86 is incorporated in the control unit 8 of the three-dimensional molding apparatus 1 as a configuration in which the powder managing unit 86 is integrated with the three-dimensional molding apparatus 1. However, the powder managing unit 86 may be implemented as a management device separate from the three-dimensional molding apparatus 1, or a part of the powder managing unit 86 may be integrated with the three-dimensional molding apparatus 1.

In the present embodiment, the drying unit 4 is configured to dry the molding tank 12 containing the molded object 62 formed by the molding unit 3, but the molded object 62 formed in the molding tank 12 by the molding unit 3 may be removed from the molding tank 12, and the molded object 62 may be dried by the drying unit 4.

### <Contribution to the Sustainable Development Goals (SDGs) initiated by the United Nations>

The embodiment of the present invention can perform a drying operation in consideration of energy efficiency, and, therefore, the embodiment of the present invention can contribute to the goals 12 and 13 of the SDGs.

Aspects of the present invention are, for example, as follows.
<1> A three-dimensional molding apparatus including:
   a molding unit configured to mold a molded object inside a molding tank by applying a mold liquid to a powder layer;
   a drying unit configured to dry the molded object molded by the molding unit; and
   a drying control unit configured to adjust at least one of a drying time or a drying temperature of the drying unit, based on an arrangement of the molded object inside the molding tank.
<2> The three-dimensional molding apparatus according to <1>, wherein the powder layer includes metal powder.
<3>. The three-dimensional molding apparatus according to <1> or <2>, wherein
   the drying unit includes a plurality of heat sources, and
   the drying control unit selects a heat source to be operated from among the plurality of heat sources, based on the arrangement of the molded product inside the molding tank.
<4> The three-dimensional molding apparatus according to any one of <1> to <3>, further inlcuding:
   an arrangement determining unit configured to determine an arrangement pattern of the molded product inside the molding tank; and
   a setting storage unit configured to store the arrangement of the molded product and setting information including at least one of the drying time or the drying temperature of the drying unit corresponding to the arrangement pattern, wherein
   the drying control unit controls the drying unit based on the setting information stored in the setting storage unit, based on the arrangement pattern determined by the arrangement determining unit.
<5> The three-dimensional molding apparatus according to any one of <1> to <4>, further incluidng:
   a powder removing unit configured to remove excess powder from the molded object dried by the drying unit; and
   a collecting unit configured to collect powder used for molding the molded object by the molding unit and the excess powder removed by the powder removing unit.
<6> The three-dimensional molding apparatus according to any one of <1> to <5>, further including:
   a sintering unit configured to sinter the molded object dried by the drying unit.
<7> The three-dimensional molding apparatus according to any one of <1> to <6>, further including:
   a solvent collecting unit configured to collect a solvent dried by the drying unit, wherein
   the drying control unit adjusts at least one of the drying time or the drying temperature based on an amount of the solvent collected by the solvent collecting unit.
<8> The three-dimensional molding apparatus according to any one of <1> to <7>, further including:
   a solvent collecting unit configured to collect a solvent dried by the drying unit; and
   an amount calculating unit configured to calculate an amount of the mold liquid applied by the molding unit, wherein
   the drying control unit adjusts at least one of the drying time or the drying temperature based on an amount of the solvent and the amount calculated by the amount calculating unit.
<9> The three-dimensional molding apparatus according to any one of <1> to <8>, further including:
   a powder managing unit configured to manage powder used by the molding unit; and
   a collecting unit configured to collect at least a part of the powder as collected powder, wherein
   the powder managing unit manages information of at least one of the drying time or the drying temperature of the drying unit in accordance with the collected powder.
<10> A three-dimensional molding method including:
   molding a molded object inside a molding tank by applying a mold liquid to a powder layer;
   adjusting at least one of a drying time or a drying temperature when drying the molded object, based on an arrangement of the molded object inside the molding tank; and
   drying the molded object molded at the molding based on at least one of the drying time or the drying temperature adjusted at the adjusting.

## Claims

1. A three-dimensional molding apparatus comprising:
a molding unit configured to mold a molded object inside a molding tank by applying a mold liquid to a powder layer;
a drying unit configured to dry the molded object molded by the molding unit; and
a drying control unit configured to adjust at least one of a drying time or a drying temperature of the drying unit, based on an arrangement of the molded object inside the molding tank.

2. The three-dimensional molding apparatus according to claim 1, wherein the powder layer includes metal powder.

3. The three-dimensional molding apparatus according to claim 1, wherein
the drying unit includes a plurality of heat sources, and
the drying control unit selects a heat source to be operated from among the plurality of heat sources, based on the arrangement of the molded product inside the molding tank.

4. The three-dimensional molding apparatus according to claim 1, further comprising:
an arrangement determining unit configured to determine an arrangement pattern of the molded product inside the molding tank; and
a setting storage unit configured to store the arrangement of the molded product and setting information including at least one of the drying time or the drying temperature of the drying unit corresponding to the arrangement pattern, wherein
the drying control unit controls the drying unit based on the setting information stored in the setting storage unit, based on the arrangement pattern determined by the arrangement determining unit.

5. The three-dimensional molding apparatus according to claim 1, further comprising:
a powder removing unit configured to remove excess powder from the molded object dried by the drying unit; and
a collecting unit configured to collect powder used for molding the molded object by the molding unit and the excess powder removed by the powder removing unit.

6. The three-dimensional molding apparatus according to claim 1, further comprising:
a sintering unit configured to sinter the molded object dried by the drying unit.

7. The three-dimensional molding apparatus according to claim 1, further comprising:
a solvent collecting unit configured to collect a solvent dried by the drying unit, wherein
the drying control unit adjusts at least one of the drying time or the drying temperature based on an amount of the solvent collected by the solvent collecting unit.

8. The three-dimensional molding apparatus according to claim 1, further comprising:
a solvent collecting unit configured to collect a solvent dried by the drying unit; and
an amount calculating unit configured to calculate an amount of the mold liquid applied by the molding unit, wherein
the drying control unit adjusts at least one of the drying time or the drying temperature based on an amount of the solvent and the amount calculated by the amount calculating unit.

9. The three-dimensional molding apparatus according to claim 1, further comprising:
a powder managing unit configured to manage powder used by the molding unit; and
a collecting unit configured to collect at least a part of the powder as collected powder, wherein
the powder managing unit manages information of at least one of the drying time or the drying temperature of the drying unit in accordance with the collected powder.

10. A three-dimensional molding method comprising:
molding a molded object inside a molding tank by applying a mold liquid to a powder layer;
adjusting at least one of a drying time or a drying temperature when drying the molded object, based on an arrangement of the molded object inside the molding tank; and
drying the molded object molded at the molding based on at least one of the drying time or the drying temperature adjusted at the adjusting.
